# EUROPEAN PATENT SPECIFICATION

(11) **EP 1 470 178 B1**
(45) Date of publication and mention of the grant of the patent: **24.05.2006**
(21) Application number: 03702547.5
(22) Date of filing: 28.01.2003
(51) Int. Cl.: C08G 63/48, C08G 63/668, C09D 167/08

(54) **AIR-DRYING PAINT COMPOSITIONS COMPRISING CARBOHYDRATE-BASED POLYESTERS**
LUFTTROCKNENDE ANSTRICHMITTEL AUF BASIS VON AUS KOHLENHYDRAT BESTEHENDEN POLYESTERN
COMPOSITIONS DE PEINTURE SECHANT A L'AIR, COMPORTANT DES POLYESTERS A BASE GLUCIDIQUE

(30) Priority: 30.01.2002 EP 02447015
(43) Date of publication of application: 27.10.2004
(73) Proprietor: SIGMA COATINGS B.V., 1422 AD Uithoorn (NL)
(72) Inventor: OOSTVEEN, E. A., Ato Business Unit Ren. Res. Dept., Bornsesteeg 59, NL-670 (NL); WEIJNEN, John, NL-2408 NT Alphen aan den Rijn (NL); VAN HAVEREN, J., Ato Business Unit Ren. Res. Dept., Bornsesteeg 59, NL-6700 AA Wageni (NL); GILLARD, Michel, B-1348 Louvain-La-Neuve (BE)
(74) Representative: Brants, Johan P.E.
(86) International application number: PCT/EP2003/000846
(87) International publication number: WO 2003/064498

(56) References cited:
- WO-A-99/38926
- DE-A- 1 418 838
- US-A- 2 572 085
- US-A- 2 818 396
- US-A- 3 870 664
- US-A- 6 075 088
- PATENT ABSTRACTS OF JAPAN vol. 9, no. 57 (C-957), 30 June 1992 (1992-06-30) & JP 04 077582 A (SUMITOMO BAIERU URETAN KK), 11 March 1992 (1992-03-11) & DATABASE WPI Week 199217 Derwent Publications Ltd., London, GB; AN 1992-136840

## Description

### FIELD OF THE INVENTION

The present invention relates to air-drying or semi-drying coating compositions. More particularly, the present invention relates to polyesters prepared from renewable materials and their use as binders in said air-drying varnishes, paints or woodstains. The present invention further relates to methods for the preparation of said polyesters and to air-drying varnish, paint or woodstain composition comprising said polyesters.

### BACKGROUND OF THE INVENTION

The need to minimise Volatile Organic Compound (VOC) emissions has led to substantial efforts to reduce the use of solvent, resulting in an increase in solids content of alkyd resin coatings and thereby not changing the application viscosity. In order to reduce the environmental burden further and to promote a sustainable, CO₂ neutral, economy there is also an increasing demand for alkyd paints based on the greatest possible use of renewable resources.

WO 9938926-A1 discloses the use of renewable polyhydric alcohols in alkyds. A large portion of the alkyd constituents stem from agricultural sources, but these binders still contain a dicarboxylic acid from petrochemical origin. EP 0 741 175 A2 describes the preparation of aqueous alkyd emulsions comprising of an alkyd binder and an emulsifier completely based on renewable raw materials.

U.S. Pat. No 2,572,085 describes alkyd resins which are formed by the esterification with a polybasic acid of a polyhydric alcohol resulting from the condensation of a polyhydroxy compound with a polyfunctional alkylating agent. DE 1 418 838 describes a process for the production of polyesters of non-reducing sugars through transesterification of the sugar by esters of multivalent acids, optionally in presence of transesterification catalysts.

Conventional air-drying alkyds can be obtained by a polycondensation reaction of one or more polyhydric alcohols, one or more polycarboxylic acids or the corresponding anhydrides and long chain unsaturated fatty acids or oils. The architecture of these resins is such that the backbone constitutes of a polyester composed of the polyols and the polycarboxylic acids. To this backbone, fatty acids from one or more drying or semi-drying oils are covalently linked. Due to its presence in naturally occurring oils, glycerol is a widely encountered polyol. Other non-limiting examples of suitable polyhydric alcohols Include: pentaerythritol, dipentaerythritol, ethylene glycol, diethylene glycol, propylene glycol, neopentyl glycol, trimethylol propane, trimethylol ethane, di-trimethylol propane and 1,6 hexane diol. Polycarboxylic acids and the corresponding anhydrides used to

synthesise alkyds are aromatic, aliphatic and cycloaliphatic components generally derived from petrochemical feedstocks. Typical examples of such polyacids include: phthalic acid and its regio-isomeric analogues, trimellitic acid, pyromellitic acid, pimelic acid, adipic acid, azelaic acid, sebacic acid, maleic acid, fumaric acid and tetrahydrophthalic acid.

Conventional alkyds are characterised by rather high molecular weight and broad molecular weight distributions, which stem from their production procedures. Even slight alterations in the process conditions can cause large discrepancies in the properties of the manufactured binders. In addition to the variation in properties, gelation can take place, which can be partly suppressed by reducing the ratio polycarboxylic acid: polyol. Dissimilar reactivity of the present hydroxyl and carboxylic acid functionalities is an additional cause of gelation and/or broadening of molecular weight distribution.

The broad molecular weight distributions give rise to high viscosity numbers. The molecular weight distributions may be visualised by size exclusion chromatography, an analytical separation method where the low molecular weight fraction is more slowed down on the column compared to the higher weight part. The higher molecular fraction has a beneficial effect on the drying performance but will increase the intrinsic viscosity of the binder, while high amounts of the low molecular oligomers exhibit a viscosity cutting behaviour but has a detrimental effect on the hardness development. As a consequence, for the preparation of paints based on conventional alkyds large amounts of aliphatic (to some extent aromatic) hydrocarbon solvents are required to obtain a practicable viscosity of the product. Low molecular weight high solids alkyds do have a reduced solvent demand but suffer from impaired drying. Monodisperse or nearly monodisperse binders combine a low solvent demand with good drying characteristics and yield a uniformly crosslinked polymer network upon curing which improves the overall film properties.

In a conventional alkyd synthesis process, the molecular weight can be controlled by the addition of transesterification catalysts at the end of the process, by a reduction of the reaction temperature and by means of mono-functional acids as chain stoppers. The obtained reduction of the polydispersity is marked but relatively limited. Alternative techniques to accomplish an increase in the solids content of alkyds are: replacement of the hydrocarbon solvents by fast viscosity cutting, oxygenated solvents; to construct highly branched alkyds with a more spherical structure that exhibit a lower intrinsic viscosity than the more linear counterparts, to increase the oil length while the acid and hydroxyl value is reduced to diminish the number of inter molecular hydrogen bonds and to make use of the reactive diluent concept; a non-volatile low molecular weight component which reduces the viscosity of the alkyd resin and becomes incorporated into the polymeric network upon curing.

It is a main object of the present invention to provide novel polyesters prepared from renewable materials and useful as binders, more in particular as "alkyd type" binders. It is another object to provide air-drying paint, varnish or woodstain compositions comprising said binders. A further object of the present invention is to provide binders with narrow molecular weight distributions and with one or more of the following properties: low volatile organic compound (VOC) demand, good drying, hardness development and levelling properties, and a high gloss retention behaviour. It is yet another object to provide autoxidisable film-forming alkyd polymers completely derivable from agricultural and renewable sources, suitable for use in coating compositions as paints, varnishes or woodstains. It is yet another object to provide paints, varnishes or woodstains with one or more of the following properties, a reduced intrinsic viscosity or fast drying characteristics or high-quality film properties such as limited yellowing, no wrinkling when applied in thick layers, elasticity, and transparency.

### SUMMARY OF THE INVENTION

At least one or more of the above-cited objects is met by the coating compositions of the present invention. The air-drying paint, varnish, and woodstain compositions of the present invention are based on binders that can be prepared from renewable materials.

They are characterized in that said binders consist of polyesters obtainable by transesterification or interesterification of: (i) a carbohydrate or an acyl ester thereof, (ii) an C₁ to C₆ alkyl ester of a drying fatty acid, semi-drying fatty acid or mixture thereof, and (iii) an C₁ to C₆ alkyl ester of a non aromatic polycarboxylic acid, wherein said carbohydrate comprises at least 2 carbohydrate units or more, and wherein said acyl is of formula R¹CO- wherein R¹ is C₁ to C₆ alkyl.

The present invention also comprises methods for the preparation of said polyesters and to the use of said polyesters as binders in coatings, more in particular as "alkyd" type binders. The invention also comprises said binders and their use in air drying paint, varnish orwoodstain compositions.

### DETAILED DESCRIPTION

The term "acyl" as used herein, refers to an alkyl group attached to a carbon-oxygen double bond. More in particular acyl as used herein refers to a radical of formula R¹CO-wherein R¹ represents an alkyl.

The term "alkyl" as used herein, alone or in combination, means straight and branched chained saturated hydrocarbon radicals containing from 1 to 6 carbon atoms, preferably from 1 to 4 carbon atoms, more preferably 1 to 2 carbon atoms. Examples of such radicals include methyl, ethyl, n-propyl, isopropyl, n-butyl, isobutyl, sec-butyl, tert-butyl, 2-methylbutyl and the like.

According to an embodiment, said acyl ester of carbohydrate is a lower acyl ester, wherein "lower" as used herein refers to C₁₋₄ carbon atoms. Suitable acyl esters of carbohydrate are acetate ester, propionate ester and the like. According to another embodiment, said alkyl ester of a drying fatty acid, semi-drying fatty acid or mixture thereof, is a short chain alkyl ester, wherein "short-chain" as used herein refers to C₁₋₆ carbon atoms. Suitable short chain alkyl esters of said fatty acids are methyl ester, ethyl ester and the like.

As used herein, the term "carbohydrate" is intended to include any component composed of at least 2 carbohydrate units or more. According to an embodiment said carbohydrate or acyl ester thereof consists of 2 to 6 carbohydrate units. According to another embodiment, said carbohydrate or acyl ester thereof consists of 2 to 4 carbohydrate units. Non-limiting examples of suitable carbohydrates include di-, tri- and oligo-saccharides such as sucrose, trehalose, raffinose, gentianose, kestose and nystose. According to a

According to an embodiment, the present invention relates to polyesters obtainable by interesterification of:
(i) an acyl ester of a carbohydrate,
(ii) an C₁ to C₆ alkyl ester of a drying fatty acid, semi-drying fatty acid or mixture thereof; and
(iii) an C₁ to C₆ alkyl ester of a *non aromatic* polycarboxylic acid,
wherein said carbohydrate comprises at least 2 carbohydrate units or more, and wherein said acyl is of formula R¹CO- wherein R¹ is C₁ to C₆ alkyl.

According to an embodiment, the present invention relates to polyesters obtainable by transesterification of:
(i) a carbohydrate,
(ii) an C₁ to C₆ alkyl ester of a drying fatty acid, semi-drying fatty acid or mixture thereof; and
(iii) an C₁ to C₆ alkyl ester of a *non aromatic* polycarboxylic acid,
wherein said carbohydrate comprises at least 2 carbohydrate units or more.

preferred embodiment, said carbohydrate or acyl ester thereof is sucrose. To reduce the melting point of the carbohydrates in the solvent-free interesterification reaction, the carbohydrate may be partly or completely acylated by, for example, acetic anhydride. The degree of substitution of the carbohydrate starting materials, is suitably in the range of 50 to 100% and preferably in the range of 75 to 100%.

Suitable drying fatty acids, semi-drying fatty acids or mixture thereof, finding use herein are ethylenically unsaturated conjugated or non-conjugated C₁₂ to C₂₄ carboxylic acids such as oleic, ricinoleic, linoleic, linolenic, licanoic acid and eleostearic acids or mixture thereof, typically used in the form of mixtures of fatty acids derived from natural or synthetic oils. Examples of suitable natural oils include but are not limited to safflower, tall oil, calendula oil, rapeseed oil, peanut oil, soya bean oil, tung oil, linseed oil, sardine oil, herring oil, sesame oil, olive oil, dehydrated castor oil, tallow oil, sunflower oil, cottonseed oil and mixtures thereof. Suitable autoxidisable fatty acids should have an iodine number of at least 100 and preferably between 100 and 140 expressed in terms of the number of centigrams of iodine per gram of fatty acids (e.g. ASTM test method D-1959). The alkyl ester preferably is a C₁-C₆ alkyl ester, more preferably is a C₁-C₄ alkyl ester and even more preferably is a C₁-C₂ alkyl ester.

The non-aromatic polycarboxylic acid moiety of the polyester according to the invention is selected from di, tri or tetra-carboxylic acids. The di(tri)-carboxylic acid moiety of the polyester according to the invention contains 4 to 54, preferably 4 to 36 carbon atoms. According to an embodiment of the present invention, the di(tri)-carboxylic fatty acid moieties consist of di(tri)-meric C₃₆ (C₅₄) fatty acids. Typical, but non-limiting examples of non-aromatic polycarboxylic acids are glutaric acid, adipic acid, pimelic acid, suberic acid, azelaic acid, sebacic acid, undecanedioic acid, 1,10-dodecanedicarboxylic acid and dimeric and trimeric fatty acids (such as those available under the trade name Pripol™ from Uniqema). The alkyl ester moiety of the esterified polycarboxylic acid contains preferably 1 to 6 carbon atoms and more preferably less than 3 carbon atoms.

For the preparation of the polyester according to the invention, the carbohydrate or acyl ester thereof may be reacted with fatty acids, alkyl ester thereof or derivative thereof and the alkyl ester of polycarboxylic acid. Said reaction may be performed according to various methods. Non limiting examples of these methods include: transesterification of the carbohydrate with fatty acid esters using a variety of catalysts; acylation of the carbohydrate with a fatty acid chloride; acylation of the carbohydrate with a fatty acid anhydride; and acylation of the carbohydrate with the desired acid, per se. (See, for example, U.S. Pat. Nos. U.S. Pat. No. 2,831,854, U.S. Pat. No. 3,600,186, U.S. Pat. No. 3,963,699, U.S. Pat. No. 4,517,360 and U.S. Pat. No. 4,518,772, all of which are incorporated by reference). More suitably said method can be either a trans- or interesterification reaction.

The polyester according to the present invention suitable as alkyd binders may, for example, be prepared from the carbohydrate or the acylated carbohydrate, the alkyl ester of fatty acids and the alkyl ester of polycarboxylic acid by a transesterification or an interesterification process.

More in particular, the present invention further relates to a method for the preparation of a polyester according to the invention, comprising the step of transesterification or interesterification of:
(i) a carbohydrate or an acyl ester thereof,
(ii) an C₁ to C₆ alkyl ester of a drying fatty acid, semi-drying fatty acid or mixture thereof; and
(iii) an C₁ to C₆ alkyl ester of a non aromatic polycarboxylic acid,
wherein said carbohydrate is composed of at least 2 carbohydrate units or more, and
wherein said acyl is of formula R¹CO- wherein R¹ is C₁-C₆ alkyl.

According to an embodiment, the present invention relates to a method for the preparation of a polyester according to the invention comprising the step of interesterification of:
(i) an acyl ester of a carbohydrate,
(ii) an C₁ to C₆ alkyl ester of a drying fatty acid, semi-drying fatty acid or mixture thereof; and
(iii) an C₁ to C₆ alkyl ester of a non aromatic polycarboxylic acid,
wherein said carbohydrate comprises at least 2 carbohydrate units or more.

According to yet another embodiment, the present invention further relates to a method for the preparation of a polyester according to the invention comprising the step of transesterification of:
(i) a carbohydrate,
(ii) an C₁ to C₆ alkyl ester of a drying fatty acid, semi-drying fatty acid or mixture thereof; and
(iii) an C₁ to C₆ alkyl ester of a *non aromatic* polycarboxylic acid,
wherein said carbohydrate comprises at least 2 carbohydrate units or more.

The interesterification reaction may be carried out by reacting the acylated carbohydrate and a mixture of short chain alkyl ester of drying or semi-drying fatty acids and a short chain alkyl ester of polycarboxylic acids at a temperature of 100 to 140 °C for 2 to 10 hours under reduced pressure to continuously remove the lower molecular fatty acid side-products from the reaction mixture. Suitable catalysts include alkali and alkali earth metal (m)ethoxides.

The alkyd resins may also be prepared by a transesterification reaction, i.e. by reacting the carbohydrate in the presence of a polar aprotic solvent with a mixture of a short chain alkyl ester of a drying or semi-drying fatty acids and a short chain alkyl ester of polycarboxylic acids. The reaction is carried out at elevated temperatures, e.g. from about 100 to about 140 °C for 6 to 36 hours in an inert atmosphere and optionally under reduced pressure. Catalysts that can suitably used in this polycondensation reaction include alkali and alkali earth metal (m)ethoxides, hydrides and carbonates. The low molecular alcohols produced by the transesterification reaction can be removed by methods known in the art, for example, distillation under reduced pressure. Optionally, hydrogen peroxide may be used to bleach the resulting product.

According to an embodiment, the interesterification or transesterification reaction can be carried out optionally in the presence of a polar aprotic solvent According to another embodiment, said reaction is performed in an inert atmosphere and optionally under reduced pressure. Suitable catalysts for performing said reaction include but are not limited to K₂CO₃, Na₂CO₃, LiOH and NaOMe.

According to another embodiment, the free OH groups of the formed polyesters can be partially or totally acylated. The amount of free residual hydroxyl groups can be diminished by an additional reaction with for example acetic anhydride.

The alkyd resins of the invention typically exhibit a number average molecular weight (Mn) of about 3000 to about 15 000, preferably about 4000 to about 10 000. The polydispersity is in the range of 2 to 48, preferably of 3 to 6 and a hydroxyl number of 20 to 70, preferably of 40 to 70.

The polyesters of this invention find particular use as binders in coating compositions, especially in high solids coating compositions. More in particular, the polyesters according to the invention can be used as binders in paints, varnishes and woodstains.

Accordingly, the present invention provides environmentally friendly, autoxidisable film-forming polyesters which are alkyd polymers completely derivable from agricultural and renewable sources with a reduced intrinsic viscosity, concomitant low solvent demand and fast drying characteristics. In the presence of an autoxidation catalyst and with oxygen, the alkyd resin is polymerised into a three dimensional network at ambient temperatures (e.g. 5 to 40 °C). The macromolecular alkyd film is characterised by fast hardness development despite the lack of an aromatic backbone, limited yellowing, no wrinkling when applied in thick layers, notable elasticity, transparency and outstanding gloss retention.

The polyesters or alkyd polymers according to the invention may be formulated into coating compositions such as varnish, woodstain or paint. The paints may optionally comprise various non-film-forming components such as pigments, extenders, corrective and constructive additives and liquid carriers. The varnishes may optionally comprise extenders, corrective and constructive additives and liquid carriers. Non-limiting examples of such materials include: inorganic and organic pigments, siccatives, anti-skinning agents, pigment and substrate wetting agents, anti-sagging agents, anti-oxidants, bactericides, fungicides, foam suppressing agents, slip agents, flow and levelling agents, UV-absorbers, HALS-radical scavengers, corrosion inhibitors, waxes, anti-crater additives, organic solvents and water.

The present invention further relates to alkyd paint comprising as a binder a polyester according to the invention and at least one drier.

Suitable autoxidation catalysts, which are also called driers or siccatives, are carboxylates or alkoxylates of alkali, alkali-earth, transition and rare earth metals. Typical examples are metal salts in which the anion is, for example, naphtenic acid, 2-ethyl-hexanoic acid, neodecanoic acid, decanoic acid, dodecanoic acid, isocarboxylic acid, sebacic and linolenic acid. Cobalt, manganese, iron, lead, zirconium, strontium, aluminium, cerium, vanadium, silver, titanium, calcium, barium, bismuth, zinc, lithium and potassium may be mentioned as suitable metals. Typically, mixtures of metal salts are used as for the autoxidation of alkyd resins, where at least one of the metals exhibits more than one oxidation number. Other examples of driers include inorganic or organic metal compounds, such as oxides, hydroxides, phosphates, carbonates, sulphates, sebacates, including neutral, acid or basic metal soaps. In terms of their metal content, the driers are used in a proportion ranging from 10⁻³ to 4% by weight, relative to the binder solids content.

The polyesters according to this invention may be formulated into coating compositions, especially high solids coating compositions, by mixing with a (mixture of) drier(s) and optionally a liquid carrier to reduce the viscosity and non-film-forming components of the type found in paints, varnishes and woodstains. Non-limiting examples of such materials include: titanium dioxide, iron oxides, carbon black, phthalocyanines, azo pigments, calcium carbonate, barium sulphate, kaolin, talc, mica, (ultra fine) zinc oxide, anti-skinning agents, pigment and substrate wetting agents, anti-sagging agents, anti-oxidants, bactericides, fungicides, algaecides, insecticides, foam suppressing agents, slip agents, flow and levelling agents, UV-absorbers, HALS-radical scavengers, corrosion inhibitors, matting agents, waxes, flame retardants, optical brighteners, adhesion promoters and anti-crater additives. The liquid carrier is preferably an organic solvent/diluent such as: white spirits, dearomatised white spirits, higher flash point white spirits, isoparafins, butyl glycol, butyl diglycol, propylene glycol mono methyl ether, dipropylene glycol mono methyl ether, butyl glycol acetate, butyl diglycol acetate and propylene glycol mono methyl ether acetate. Mixtures of solvents may also be used. The solvent is present at such an amount to as to keep the volatile organic compound content below about 270 grams per litre, preferably below about 200 grams per litre of the total coating, at a practical application viscosity. However, the liquid carrier may also be water including a suitable emulsifier, containing the resin in the form of an emulsion.

The paint compositions according to the invention are particularly suitable for use as decorative paints. They can be applied in adequately high layer thickness and they have good hiding power and drying properties.

The invention is illustrated by the following representative, though non-limiting, examples.

### EXAMPLES

### Test methods employed

The following properties have been measured for some or all paint exemplified hereafter:

The low shear paint viscosity was measured with a HAAKE VT500 viscosimeter using a cylindrically shaped e E30 spindle at rotation speed of 179 rpm and at 23 °C.

High shear paint viscosity was measured in accordance with the ICI cone & plate method (ASTM D 4287) at a shear rate of 10000 s⁻¹ in dPa.s.

The solids content and VOC level of the formulations are calculated from the percentage solids material of the distinct components and the specific gravity of the solvent used.

The drying stages of the paint formulations were assessed using a BK-drying recorder (Sheen instruments Ltd). A 150 µm wet paint layer is applied on a glass strip 30.5 x 2.5 cm. A vertical blunt needle is positioned into the freshly applied film by a 5 g load and then dragged through the drying paint at a speed of 24.4 mm/h in a direction parallel to the length of the coat.

Wrinkling was determined by visual evaluation of the dried film subsequent to applying a wet layer thickness of 300 µm on glass panels. Results are reported according to the "Sigma scale" were 0 indicates a completely smooth film and 5 means severe wrinkling over the total film surface.

The elasticity of the paint film is assessed using the Erichsen cupping test according to ISO 1520. Using a mechanically driven indenter and a lens, the depth of indentation at which the coating starts to crack is established.

The gloss level of a paint film was measured after 24 hours of drying with a Dr. Lange Refo 3 reflectometer in accordance with ISO 2813.

The levelling rating was appraised by the extent of fading of the brush marks upon application and the smoothness of the dried surface. The levelling rating is established by means of a notation scale, from 1 (good levelling) to 5 (poor levelling).

To evaluate the yellowing tendency of the formulations, an accelerated method is used which is described in the *American Paint & Coating Journal, January 17, 1994, page 44.*

For this test, a wet paint film was applied on the reverse side of a Lenata Form 2A to prevent absorption of the ammonia by the paper. After seven days of drying, the coated section of the charts was cut out and taped on the inside of a pail. Ten drops of 25% ammonia were placed in a small watch glass on the bottom of the pail and the lid was closed. The panels were removed after six hours of ammonia exposure and the colour was determined within 5 minutes. The whiteness of a paint film is measured by using the Cie-lab algorithm, before and after 6 hours of exposition to an ammonia atmosphere.

The adhesion of the paint films on spruce and aged alkyds was determined according to the cross-hatch method (ISO 2409) and the cross cut test (ASTM D3359). On the substrates, a 100 µm thick wet paint film was applied and dried for 1 week under ambient conditions. After 1 week, incisions in the film were made and the adhesion was tested by the tape pull-off method. The adhesion rating is established by means of a notation scale, from 0 (very good adhesion) to 5 (poor adhesion).

The gloss retention of the paint films under conditions of artificially accelerated weathering was established in a QUV-A cabinet (QUV Q-Panel) according to ASTM G 53. The paint was applied on aluminium Q-panel, aged for 3 weeks under ambient conditions and afterwards exposed to a cycle of 4 hours UV-A light and 4 hours of condensation with demineralised water in the absence of UV-light. The gloss readings at angle 60 ° were monitored for at least 6 weeks, and are presented in table 3.

The hardness of the paint film was assessed by using the pendulum damping test according to ISO 1522. A glass panel was coated with a 150 *µ*m wet film layer, kept under conditions of 23 °C and 50% RH and the hardness development in time was monitored with a König pendulum. The oscillation time measured to reduce the deflection from the initial 6° to 3° is given in seconds.

The molecular weight distribution was determined by Gel Permeation Chromatography (GPC apparatus from Millipore) using THF as solvent, 3 columns of Plgel 5mm, mixed-D from Polymer laboratories, calibration curve with commercial polystyrene standards.

The acid value was measured according to ASTM method D 1980-87 and the value is expressed in mg KOH/g

The hydroxyl value was measured according to ASTM method D 1957-86 and the value is expressed in mg KOH/g

The degree of substitution (DS) is the sucrose functionalities which are substituted; it was established by quantitative ¹³C NMR, using a Bruker DPX 300 spectrometer.

Unless specified, all reactants are commercially available from Acros Organics or Merck.

FAME is the abbreviation for fatty acid methyl ester

For relative properties, a notation scale was used, from 1 (good) to 5 (bad)

### Example 1

### Preparation of the binder

In a suitable reactor, the following were added:
300 parts by weight (pbw) of sucrose octaacetate;
876 pbw of safflower FAME (Radia 30139, from Oleon) having the following fatty acid composition:
   linoleic acid: about 75 wt %;
   oleic acid: about 14 wt %;
171.4 pbw dimethyl dimerate (Radia 7119 from Oleon)

The mixture was heated at a temperature of 75 - 80 °C at reduced pressure for about 15 minutes. Then - under a stream of nitrogen - 15 pbw of sodium methoxide were added. Under vacuum (20 - 30 mBar) the temperature of the reaction mixture was raised to 110 - 115 °C. After a few minutes the reaction started. Due to the formation of methyl acetate the pressure in the reactor increased temporarily to about 150 mBar. Heating was continued at reduced pressure and a temperature of 110 - 115 °C for period of 8 hours under the concomitant distillation of the volatiles. After cooling to about 40 °C the reaction mixture was quenched by the addition of 30 pbw of glacial acetic acid. To the resulting mixture consecutively were added 3 L petroleum ether (PE) (Bp.: 40 - 60 °C) and 0.5 L methanol. After separation of the methanol layer the PE layer was washed five times with methanol (about 300 ml).

The binder obtained after evaporation of the volatiles had the following properties:
degree of substitution (linoleate / dimerate): 7.7
degree of substitution (acetate): 0.3
safflower FAME content: 10 %
hydroxyl value: 24.9
acid value: 3.5
polydispersity: 2.1
number-average molecular weight: 4.3 x 10³
viscosity: 17.5 dPa.s at 23 °C.

### Example 2

### Preparation of the binder

In a suitable reactor, the following were added:
216 parts by weight (pbw) of sucrose octaacetate;
582.6 pbw of safflower FAME (Radia 30139 from Oleon)
169 pbw dimethyl dimerate, Radia 7119 from Oleon

The mixture was heated at a temperature of 75 - 80 °C at reduced pressure for about 15 minutes. Then - under a stream of nitrogen -10.8 pbw of sodium methoxide were added. Under vacuum (20 - 30 mBar) the temperature of the reaction mixture was raised to 110 - 115 °C. After a few minutes the reaction started. Due to the formation of methyl acetate the pressure In the reactor increased temporarily to about 150 mBar. Heating was continued at reduced pressure and a temperature of 110 - 115 °C for period of 8 hours under the concomitant distillation of the volatiles. After cooling to about 40 °C the reaction mixture was quenched by the addition of 21.6 pbw of glacial acetic acid. To the resulting mixture consecutively were added 2.2 L PE (Bp.: 40 - 60 °C) and 0.36 L methanol. After separation of the methanol layer the PE layer was washed five times with methanol (about 250 ml).

The binder obtained after evaporation of the volatiles had the following properties:
degree of substitution (linoleate / dimerate): 7.3
degree of substitution (acetate): 0.7
safflower FAME content: 10 %
hydroxyl value: 20.7
acid value: 3.5
polydispersity: 3.2
number-average molecular weight: 5.3 x 10³
viscosity: 46 dPa.s at 23 °C.

### Example 3

### Preparation of the binder

In a suitable reactor, the following were added:
510 parts by weight (pbw) of sucrose octaacetate;
1234.2 pbw of safflower FAME (Radia 30139 from Oleon)
445.8 pbw dimethyl dimerate, Radia 7119 from Oleon

The mixture was heated at a temperature of 75 - 80 °C at reduced pressure for about 15 minutes. Then - under a stream of nitrogen - 18 pbw of sodium methoxide were added. Under vacuum (20- 30 mBar) the temperature of the reaction mixture was raised to 110-115 °C. After a few minutes the reaction started. Due to the formation of methyl acetate the pressure in the reactor increased temporarily to about 150 mBar. Heating was continued at reduced pressure and a temperature of 110 -115 °C for period of 10 hours under the concomitant distillation of the volatiles. After cooling to about 80 °C the reaction mixture was quenched by the addition of a mixture of 450 ml ShellSol D-40 and 50 pbw of glacial acetic acid. To the resulting mixture - upon cooling to 40 °C - consecutively were added 5 L PE (Bp.: 40 - 60 °C) and 1 L methanol. After separation of the methanol layer the PE layer was washed five times with methanol (about 400 ml).

The binder obtained after evaporation of the volatiles had the following properties:
degree of substitution (linoleate / dimerate): 7.0
degree of substitution (acetate): 1.0
safflower FAME content: 10 %
hydroxyl value: 21.1
acid value: 3.7
polydispersity: 5.2
number-average molecular weight: 5.5 × 10³
viscosity of a 96 wt % solution in Shellsol D40 (Shell): 49 dPa.s at 23 °C.

### Example 4

### Preparation of the binder

In a suitable reactor, the following were added:
270 parts by weight (pbw) of sucrose octaacetate;
541.8 pbw of safflower FAME (Radia 30139 from Oleon)
153 pbw dimethyl dimerate (Radia 7119 from Oleon)

The mixture was heated at a temperature of 75 - 80 °C at reduced pressure for about 15 minutes. Then - under a stream of nitrogen - 13.5 pbw of sodium methoxide were added. Under vacuum (20- 30 mBar) the temperature of the reaction mixture was raised to 110-115 °C. After a few minutes the reaction started. Due to the formation of methyl acetate the pressure in the reactor increased temporarily to about 150 mBar. Heating was continued at reduced pressure and a temperature of 110 - 115 °C for period of 10 hours under the concomitant distillation of the volatiles. After cooling to about 80 °C the reaction mixture was quenched by the addition of a mixture of 250 ml ShellSol D-40 and 27 pbw of glacial acetic acid. To the resulting mixture - upon cooling to 40 °C - consecutively were added 2.5 L PE (Bp.: 40 - 60 °C) and 0.6 L methanol. After separation of the methanol layer the PE layer was washed five times with methanol (about 250 ml).

The binder obtained after evaporation of the volatiles had the following properties:
degree of substitution (linoleate / dimerate): 6.5
degree of substitution (acetate): 1.5
safflower FAME content: < 5 %
hydroxyl value: 19.3
acid value: 3.5
polydispersity: 5.2
number-average molecular weight: 5.5 × 10³
viscosity: 125 dPa.s at 23 °C.

### Example 5

### Preparation of the binder

In a suitable reactor, the following were added:
407.2 parts by weight (pbw) of sucrose octaacetate;
625.5 pbw of safflower FAME (Radia 30139 from Oleon)
80.2 pbw dimethyl dimerate (Radia 7119 from Oleon)

The mixture was heated at a temperature of 75 - 80 °C at reduced pressure for about 15 minutes. Then - under a stream of nitrogen -11.1 pbw of sodium methoxide were added. Under vacuum (20 - 30 mBar) the temperature of the reaction mixture was raised to 110-115 °C. After a few minutes the reaction started. Due to the formation of methyl acetate the pressure in the reactor Increased temporarily to about 150 mBar. Heating was continued at reduced pressure and a temperature of 110 -115 °C for period of 3.5 hours under the concomitant distillation of the volatiles. After cooling to about 80 °C the reaction mixture was quenched by the addition of a mixture of 100 ml ShellSol D-40 and 40 pbw of glacial acetic acid. To the resulting mixture - upon cooling to 40 °C - consecutively were added 2 L PE (Bp.: 40 - 60 °C) and 0.5 L methanol. After separation of the methanol layer the PE layer was washed five times with methanol (about 250 ml).

The binder obtained after evaporation of the volatiles had the following properties:
degree of substitution (linoleate / dimerate): 5.4
degree of substitution (acetate): 2.6
safflower FAME content: << 5 %
hydroxyl value: 25
acid value: 4.7
polydispersity: 2.1
number-average molecular weight: 4.0 × 10³
viscosity of a 95 wt % solution in Shellsol D40 solvent: 53 dPa.s at 23 °C.

### Example 6

### Preparation of the binder

In a suitable reactor, the following were added:
540 parts by weight (pbw) of sucrose octaacetate;
1290.6 pbw of safflower FAME (Radia 30139 from Oleon)
332.4 pbw dimethyl adipate

The mixture was heated at a temperature of 75 - 80 °C at reduced pressure for about 15 minutes. Then - under a stream of nitrogen - 40.5 pbw of sodium methoxide were added. Under vacuum (20- 30 mBar) the temperature of the reaction mixture was raised to 110-115 °C. After a few minutes the reaction started. Due to the formation of methyl acetate the pressure in the reactor increased temporarily to about 150 mBar. Heating was continued at reduced pressure and a temperature of 110 - 115 °C for period of 5 hours under the concomitant distillation of the volatiles. After cooling to about 80 °C the reaction mixture was quenched by the addition of a mixture of 750 ml ShellSol D-40 and 75 pbw of glacial acetic acid. To the resulting mixture - upon cooling to 40 °C - consecutively were added 3 L PE (Bp.: 40 - 60 °C) and 1 L methanol. After separation of the methanol layer the PE layer was washed six times with methanol (about 500 ml).

The binder obtained after evaporation of the volatiles had the following properties:
degree of substitution (linoleate / adipate): 7.1
degree of substitution (acetate): 0.9
safflower FAME content: 20 %
hydroxyl value: 41.8
acid value: 9.6
polydispersity: 6.9
number-average molecular weight: 7.7 × 10³
viscosity of a 85 wt % solution in Shellsol D40 solvent 123 dPa.s at 23 °C.

### Example 7

### Preparation of the binder

In a suitable reactor, the following were added:
360 parts by weight (pbw) of sucrose octaacetate;
922 pbw of safflower FAME (Radla 30139 from Oleon)
183.2 pbw dimethyl sebacate

The mixture was heated at a temperature of 75 - 80 °C at reduced pressure for about 15 minutes. Then - under a stream of nitrogen - 26.8 pbw of sodium methoxide were added. Under vacuum (20 - 30 mBar) the temperature of the reaction mixture was raised to 110-115 °C. After a few minutes the reaction started. Due to the formation of methyl acetate the pressure in the reactor increased temporarily to about 150 mBar. Heating was continued at reduced pressure and a temperature of 110 - 115 °C for period of 4 hours under the concomitant distillation of the volatiles (About 85 % of the theoretical amount of methyl acetate could be collected). After cooling to about 80 °C the reaction mixture was quenched by the addition of a mixture of 400 ml ShellSol D-40 and 50 pbw of glacial acetic acid. To the resulting mixture - upon cooling to 40 °C - consecutively were added 3 L PE (Bp.: 40 - 60 °C) and 1 L methanol. After separation of the methanol layer the PE layer was washed five times with methanol (about 500 ml).

The binder obtained after evaporation of the volatiles had the following properties:
degree of substitution (linoleate / sebacate): 7.5
degree of substitution (acetate): 0.5
safflower FAME content: 15 %
hydroxyl value: 27.6
acid value: 4.6
polydispersity: 4.4
number-average molecular weight: 7.1 × 10³
viscosity: 38.2 dPa.s at 23 °C.

### Example 8

### Preparation of the binder

In a suitable reactor, the following were added:
360 parts by weight (pbw) of sucrose octaacetate;
922 pbw of safflower FAME (Radia 30139 from Oleon)
213 pbw dimethyl sebacate

The mixture was heated at a temperature of 75 - 80 °C at reduced pressure for about 15 minutes. Then - under a stream of nitrogen - 26.8 pbw of sodium methoxide were added. Under vacuum (20 - 30 mBar) the temperature of the reaction mixture was raised to 110-115 °C. After a few minutes the reaction started. Due to the formation of methyl acetate the pressure in the reactor increased temporarily to about 150 mBar. Heating was continued at reduced pressure and a temperature of 110-115 °C under the concomitant distillation of the volatiles until about 75 % of the theoretical amount of methyl acetate was collected. After cooling to about 80 °C the reaction mixture was quenched by the addition of a mixture of 400 ml ShellSof D-4.0 and 50 pbw of glacial acetic acid. To the resulting mixture - upon cooling to 40 °C - consecutively were added 3 L PE (Bp.: 40 - 60 °C) and 1 L methanol. After separation of the methanol layer the PE layer was washed five times with methanol (about 500 ml).

The binder obtained after evaporation of the volatiles had the following properties:
degree of substitution (linoleate / sebacate): 7.2
degree of substitution (acetate): 0.8
safflower FAME content: 15 %
hydroxyl value: 24.7
acid value: 3.8
polydispersity: 3.7
number-average molecular weight: 6.5 × 10³
viscosity: 24.5 dPa.s at 23 °C.

### Example 9

### Preparation of the binder

In a suitable reactor, the following were added:
3280 pbw of N,N-dimethylacetamide;
205.2 pbw of sucrose;
1042.8 pbw of safflower FAME (Radia 30139 from Oleon)
250.4 pbw of dimethyl adipate

The mixture was heated at a temperature of 70 - 75 °C at reduced pressure (250 - 300 mBar) for about 15 minutes. Then - under a stream of nitrogen - 40 pbw of potassium carbonate were added. Under vacuum (250 mBar) the temperature of the reaction mixture was raised to 120-122 °C. Heating was continued for a period of 23 hours under the concomitant distillation of the volatiles. The solvent and any remaining methanol were distilled off under reduced pressure (20 mBar). The resulting product was dissolved in petroleum ether (boiling point: 40-60°C) and washed consecutively with an aqueous ammonium chloride solution and several times with to remove the excess of safflower FAME.

The binder obtained after evaporation of the volatiles had the following properties:
safflower FAME content: 15 %
hydroxyl value: 68.2
acid value: 7.8
polydispersity: 3.8
number-average molecular weight: 6.8 × 10³
viscosity: 243 dPa.s at 23 °C.

### Example 10

### Preparation of the binder

In a suitable reactor, the following were added:
2350 pbw of N,N-dimethylacetamide;
205.2 pbw of sucrose;
1042.8 pbw of safflower FAME (Radia 30139 from Oleon)
356.4 pbw dimethyl dimerate (Radia 7119 from Oleon)

The mixture was heated at a temperature of 70 - 75 °C at reduced pressure (250 - 300 mBar) for about 15 minutes. Then - under a stream of nitrogen ― 40 pbw of potassium carbonate were added. Under vacuum (250 mBar) the temperature of the reaction mixture was raised to 120-122 °C. Heating was continued for a period of 24 hours under the concomitant distillation of the volatiles. The solvent and any remaining methanol were distilled off under reduced pressure (20 mBar). The resulting product was dissolved in petroleum ether (boiling point: 40-60°C) and treated with 1.5 equivalent hydrogen peroxide (2 % aqueous solution; 1.5 mol per mol of sucrose) during 60 minutes at a temperature of 25°C. The organic layer was washed several times with methanol to remove the excess of safflower FAME.

The binder obtained after evaporation of the volatiles had the following properties:
safflower FAME content: 15 %
hydroxyl value: 64.4
acid value: 4.2
polydispersity: 2.1
number-average molecular weight: 4.9 × 10³
viscosity: 264.8 dPa.s at 23 °C.

### Example 11

### Preparation of the binder

In a suitable reactor, the following were added:
270 parts by weight (pbw) of sucrose octaacetate;
645.3 pbw of safflower FAME (Radia 30139 from Oleon)
76.5 pbw dimethyl glutarate

The mixture was heated at a temperature of 75 - 80 °C at reduced pressure for about 15 minutes. Then - under a stream of nitrogen - 20.1 pbw of sodium methoxide were added. Under vacuum (20 - 30 mBar) the temperature of the reaction mixture was raised to 110-115 °C. After a few minutes the reaction started. Due to the formation of methyl acetate the pressure in the reactor increased temporarily to about 150 mBar. Heating was continued at reduced pressure and a temperature of 110 - 115 °C for period of 8 hours under the concomitant distillation of the volatiles. After cooling to about 80 °C the reaction mixture was quenched by the addition of a mixture of 200 ml ShellSol D-40 and 37.5 pbw of glacial acetic acid. To the resulting mixture - upon cooling to 40 °C - consecutively were added 1.5 L PE (Bp.: 40 - 60 °C) and 0.5 L methanol. After separation of the methanol layer the PE layer was washed five times with methanol (about 200 ml).

The binder obtained after evaporation of the volatiles had the following properties:
degree of substitution (linoleate / glutarate): 7.5
degree of substitution (acetate): 0.5
safflower FAME content: 10 %
hydroxyl value: 38.6
acid value: 6.9
polydispersity: 2.5
number-average molecular weight: 4.9 × 10³
viscosity: 11 dPa.s at 23 °C.

### Example 12

### Preparation of the binder

In a suitable reactor, the following were added:
90 parts by weight (pbw) of sucrose octaacetate;
230.6 pbw of safflower FAME (Radia 30139 from Oleon)
26.9 pbw dimethyl suberate

The mixture was heated at a temperature of 75 - 80 °C at reduced pressure for about 15 minutes. Then - under a stream of nitrogen - 6.7 pbw of sodium methoxide were added. Under vacuum (20 - 30 mBar) the temperature of the reaction mixture was raised to 110-115 °C. After a few minutes the reaction started. Due to the formation of methyl acetate the pressure in the reactor increased temporarily to about 150 mBar. Heating was continued at reduced pressure and a temperature of 110 - 115 °C for period of 6 hours under the concomitant distillation of the volatiles. After cooling to about 80 °C the reaction mixture was quenched by the addition of a mixture of 100 ml ShellSol D-40 and 12.5 pbw of glacial acetic acid. To the resulting mixture - upon cooling to 40 °C - consecutively were added 1 L PE (Bp.: 40 - 60 °C) and 0.4 L methanol. After separation of the methanol layer the PE layer was washed five times with methanol (about 200 ml).

The binder obtained after evaporation of the volatiles had the following properties:
degree of substitution (linoleate / suberate): 7.5
degree of substitution (acetate): 0.5
safflower FAME content: 10 %
hydroxyl value: 35.4
acid value: 7.6
polydispersity: 2.6
number-average molecular weight: 6.0 × 10³
viscosity: 33.5 dPa.s at 23 °C.

### Example 13

### Preparation of the binder

In a suitable reactor, the following were added:
2811 pbw of N,N-dimethylacetamide;
153.9 pbw of sucrose;
782 pbw of safflower FAME (Radia 30139 from Oleon)
155.4 pbw of dimethyl sebacate

The mixture was purged with a stream of nitrogen and heated at a temperature of about 70 °C for about 15 minutes. Then 30 pbw of potassium carbonate were added. Thereupon the temperature of the reaction mixture was raised to 120-122 °C. Heating was continued at that temperature for a period of 20 - 24 hours under the concomitant distillation of the volatiles (solvent and methanol). The remaining solvents were distilled off under reduced pressure. The resulting product was dissolved in petroleum ether (boiling point 40-60°C) and filtered through Celite. The filtrate was washed consecutively with an aqueous ammonium chloride (10%) solution, water and methanol.

The binder obtained after evaporation of the volatiles had the following properties:
safflower FAME content: 21 mol %
polydispersity: 1.9
number-average molecular weight: 4.2 × 10³
viscosity: 55 dPa.s at 23 °C.

### Example 14

### Preparation of the binder

In a suitable reactor, the following were added:
3670 pbw of N,N-dimethylacetamide;
205.2 pbw of sucrose;
1042.5 pbw of safflower FAME (Radia 30139 from Oleon)
194.4 pbw of dimethyl sebacate

The mixture was purged with a stream of nitrogen and heated at a temperature of about 70 °C for about 15 minutes. Then 40 pbw of potassium carbonate were added. Thereupon the temperature of the reaction mixture was raised to 120-122 °C. Heating was continued at that temperature for a period of 20 - 24 hours under the concomitant distillation of the volatiles (solvent and methanol). The remaining solvents were distilled off under reduced pressure. The resulting product was dissolved in petroleum ether (boiling point: 40-60°C) and filtered through Celite. The filtrate was washed consecutively with an aqueous ammonium chloride (10%) solution, water and methanol.

The binder obtained after evaporation of the volatiles had the following properties:
safflower FAME content 20 mol %
polydispersity: 2.9
number-average molecular weight: 5.4 × 10³
viscosity: 62.5 dPa.s at 23 °C.

### Example 15

### Preparation of the binder

In a suitable reactor, the following were added:
2624 pbw of N,N-dimethylacetamide;
684.6 pbw of sucrose;
174.2 pbw of dimethyl adipate

The mixture was heated at a temperature of 70 - 75 °C at reduced pressure (250 - 300 mBar) for about 15 minutes. Then - under a stream of nitrogen - 40 pbw of potassium carbonate were added. The temperature of the reaction mixture was raised to 120°C.

Heating was continued for a period of 3 hours under the concomitant distillation of the volatiles. Then the reaction mixture was cooled down to 70°C and 1737.6 pbw of safflower FAME (Radia 30139) were added. Another 10 hours at 120°C under the concomitant distillation of the volatiles

The binder obtained after evaporation of the volatiles had the following properties:
safflower FAME content: 10 mol %
Hydroxyl value: 151.4
Acid value: 5.7
polydispersity: 2.0
number-average molecular weight: 1.3 × 10³
viscosity: 185 dPa.s at 23 °C.

**Table 1: coating compositions and characteristics of the wet formulations**

| | Paint 1 | Paint 2 | Paint 3 | Paint 4 | Paint 5 | Paint 7 | Paint 8 | Paint 9 | Paint 10 |
|---|---|---|---|---|---|---|---|---|---|
| Binder 1 | 53.80 | | | | | | | | |
| Binder 2 | | 50.85 | | | | | | | |
| Binder 3 | | | 49.85 | | | | | | |
| Binder 4 | | | | 48.69 | | | | | |
| Binder 5 | | | | | 47.33 | | | | |
| Binder 7 | | | | | | 47.95 | | | |
| Binder 8 | | | | | | | 49.65 | | |
| Binder 9 | | | | | | | | 49.65 | |
| Binder 14 | | | | | | | | | 48.64 |
| Solvent | 2.81 | 7.10 | 9.16 | 11.13 | 9.91 | 9.79 | 6.59 | 6.59 | 9.27 |
| Dispersant | 0.70 | 0.68 | 0.67 | 0.97 | 0.99 | 0.98 | 1.01 | 1.01 | 0.99 |
| Ti0₂ | 36.20 | 35.21 | 34.51 | 35.02 | 35.50 | 35.23 | 36.48 | 36.48 | 35.74 |
| Anti-skinning agent | 0.80 | 0.78 | 0.77 | 0.78 | 0.79 | 0.78 | 0.81 | 0.81 | 0.79 |
| Ca-5 | 3.76 | 3.56 | 3.35 | 3.74 | 3.79 | 3.64 | 3.77 | 3.77 | 3.14 |
| Zr-18 | 1.49 | 1.41 | 1.32 | 1.30 | 1.31 | 1.27 | 1.31 | 1.31 | 1.12 |
| Co-10 | 0.43 | 0.41 | 0.38 | 0.37 | 0.38 | 0.37 | 0.38 | 0.38 | 0.31 |
| Total | 100.00 | 100.00 | 100.00 | 100.00 | 100.00 | 100.00 | 100.00 | 100.00 | 100.00 |
| Viscosity paint (dPa.s) | 14.0 | 14.0 | 13.8 | 14.5 | 10.4 | 11.2 | 12.1 | 10.6 | 11.0 |
| Cone & plate viscosity (dPa.s) | > 10 | 9.8 | 9.6 | > 10 | > 10 | 5.5 | 9.0 | 6.9 | 8.2 |
| Solids content (wt%) | 93.7 | 89.6 | 85.7 | 85.4 | 86.6 | 86.8 | 89.9 | 84.9 | 87.7 |
| VOC (g/L) | 83 | 134 | 180 | 186 | 174 | 169 | 132 | 198 | 167 |

**Table 2: Characteristics of films obtained with the paints according to the invention:**

| | | Paint 1 | Paint 2 | Paint 3 | Paint 4 | Paint 5 | Paint 7 | Paint 8 | Paint 9 | Paint 10 | REF 1 | REF 2 |
|---|---|---|---|---|---|---|---|---|---|---|---|---|
| BK drying recorder @ 23 °/50% RH | | | | | | | | | | | | |
| Run back | | 2 h | 1 h, 30' | 1 h, 40' | 1 h, 30' | 1 h, 45' | 1 h, 25' | 1 h, 40' | 1 h, 35' | 2h, 30' | 1 h, 30' | 1h, 25' |
| start of gel tear | | 2 h | 1 h, 30' | 1 h, 40' | 1 h, 30' | 1 h, 45' | 1 h, 40' | 1 h, 55' | 1 h, 50' | 2h, 30' | 1 h, 30' | 1 h, 25' |
| End of gel tear | | 6h, 30' | 6h, 3D' | >12 h | 10h,50' | >12 h | 14 h, 30' | 4h | 3h,10' | 5h,30' | 9h,30' | 6h,35' |
| End of track | | >12h | >12h | >12h | >12h | >12h | 14h,50' | 13h,10' | 10h | 8h,50' | >12h | >12h |
| Wrinkling @ thickness | 300 *µ*m wet film | 0 | 0 | 0 | 0 | 0 | 0 | 0 | 0 | 0 | 0 | 0 |
| Elasticity (depth of indentation in mm) | | 8.3 | 8.4 | 8.3 | 8.5 | 9.1 | 7.3 | 7.0 | 7.6 | 8.3 | 8.5 | 9.2 |
| Gloss at ∠ 20°/60° | | 75/89 | 83/99 | 66/84 | 70/84 | 77/90 | 76/86 | 72/84 | 76/87 | 82/88 | 77/87 | 76/88 |
| Levelling | | 0-1 | 0-1 | 0-1 | 1 | 1-2 | 1 | 1 | 1 | 0-1 | 1 | 1 |
| König hardness | 1 day | 9.3 | 10.3 | 12.6 | 11.9 | 14.2 | 30.8 | 39.2 | 22.4 | 18.2 | 14.0 | 10.3 |
| | 14 days | 21.8 | 23.5 | 28.3 | 31.8 | 29.8 | 32.2 | 42.0 | 26.6 | 33.6 | 25.2 | 28.5 |
| Adhesion on aged alkyds | | 2 | 2 - 3 | 2 - 3 | 0 | 0 | 2 | 3 | 3 | 1-2 | 0 | 0 |
| | 1. Cross-hatch | | | | | | | | | | | |
| | 2. Cross-cut | 0 | 0 -1 | 0 | 0 | 0 | 0 | 0 | 1 | 0 | 0 | 0 |
| Adhesion on bare spruce | | 1 - 2 | 0 | 0 | 2 - 3 | 2 - 3 | 1 | 0 | 2 | 1 - 2 | 1 | 1 |
| | 1. Cross-hatch | | | | | | | | | | | |
| | 2. Cross-cut | 0 | 0 | 0 | 0 | 1 | 0 | 0 | 0 | 0 | 0 | 0 |

| | | | | | | | | | | | | |
|---|---|---|---|---|---|---|---|---|---|---|---|---|
| Ref. 1 and 2 are commercial high-solid formulations, based on phthalic acid containing alkyds. Ref. 1 is an air-drying high-solid paint for outside and inside based on modified alkyd resins with a VOC of about 257 g/l. Ref. 2 is a rapid through-drying high solid paint for outside and inside based on modified urethane-alkyd resins with a VOC of 263 g/l. | | | | | | | | | | | | |

**Table 3: Gloss retention upon QUV-A weathering**

| exposition time (weeks) | Paint 1 | Paint 2 | Paint 3 | Paint 4 | Paint 5 | REF 2 |
|---|---|---|---|---|---|---|
| Initial | 86.0 | 94.2 | 84.0 | 84.2 | 88.5 | 79.6 |
| 1 | 81.1 | 90.3 | 83.0 | 75.1 | 79.2 | 66.9 |
| 2 | 78.6 | 89.2 | 76.8 | 70.1 | 74.7 | 64.6 |
| 3 | 77.0 | 89.1 | 75.5 | 66.4 | 68.8 | 66.3 |
| 5 | 76.4 | 86.1 | 74.0 | 61.5 | 62.6 | 63.2 |
| 7 | 69.6 | 76.2 | 66.9 | 58.0 | 63.2 | 64.6 |
| 9 | 55.8 | 54.7 | 48.4 | 53.4 | 59.7 | 52.5 |
| 11 | 52.2 | 51.2 | 47.1 | 48.8 | 56.7 | 42.0 |
| 13 | 49.8 | 47.8 | 43.2 | 32.4 | 42.0 | 34.5 |
| 15 | 49.3 | 46.2 | 40.3 | 21.9 | 29.9 | 26.8 |

The formulations according to the invention exhibit a lower VOC-content, along with a better levelling, remarkably good gloss retention and comparable or even better hardness development compared to commercially available phthalic acid-based high-solid products with a VOC below 250g/l.

## Claims

1. Polyester obtainable by transesterification or interesterification of:
(i) a carbohydrate or an acyl ester thereof,
(ii) an C1 to C6 alkyl ester of a drying fatty acid, semi-drying fatty acid or mixture thereof; and
(iii) an C₁ to C₆ alkyl ester of *a non aromatic* polycarboxylic acid,
wherein said carbohydrate comprises at least 2 carbohydrate units or more, and wherein said acyl is of formula R¹CO- wherein R¹ is C₁ to C₆ alkyl.

2. Polyester according to claim 1, obtainable by interesterification of:
(i) an acyl ester of a carbohydrate,
(ii) an C₁ to C₆ alkyl ester of a drying fatty acid, semi-drying fatty acid or mixture thereof; and
(iii) an C₁ to C₆ alkyl ester of *a non aromatic* polycarboxylic acid,
wherein said carbohydrate comprises at least 2 carbohydrate units or more, and wherein said acyl is of formula R¹CO- wherein R¹ is C₁ to C₆ alkyl.

3. Polyester according to claim 1, obtainable by transesterification of:
(i) a carbohydrate,
(ii) an C₁ to C₆ alkyl ester of a drying fatty acid, semi-drying fatty acid or mixture thereof; and
(iii) an C₁ to C₆ alkyl ester of *a non aromatic* polycarboxylic acid,
wherein said carbohydrate comprises at least 2 carbohydrate units or more.

4. Polyester according to any of claims 1 to 3, wherein said carbohydrate or acyl ester thereof consists of 2 to 6 carbohydrate units.

5. Polyester according to claim 4, wherein said carbohydrate or acyl ester thereof consists of 2 to 4 carbohydrate units

6. Polyester according to any of claims 1 to 5, wherein said carbohydrate or acyl ester thereof is selected from the group comprising sucrose, trehalose, raffinose, gentianose, kestose and nystose.

7. Polyester according to claim 6, wherein said carbohydrate or acyl ester thereof is sucrose.

8. Polyester according to any of claims 1 to 7, wherein said drying or semi-drying fatty acid or mixture thereof, is selected from ethylenically unsaturated conjugated or non-conjugated C₁₂ to C₂₄ carboxylic acids.

9. Polyester according to any of claims 1 to 8, wherein said drying fatty acid or semi-drying fatty acid or mixture thereof has an iodine number of at least 100 and preferably between 100 and 140.

10. Polyester according to any of claims 1 to 9, wherein said non-aromatic polycarboxylic acid is selected from di, tri or tetra-carboxylic acids.

11. Polyester according to any of claims 1 to 10, wherein said non-aromatic polycarboxylic acid is selected from the group comprising glutaric acid, adipic acid, pimelic acid, suberic acid, azelaic acid, sebacic acid, undecanedicic acid, 1,10-dodecanedicarboxylicacid, dimeric and trimeric fatty acids.

12. Method for the preparation of a polyester according to any of claims 1 to 11, comprising the step of transesterification or interesterification of:
(i) a carbohydrate or an acyl ester thereof,
(ii) an C₁ to C₆ alkyl ester of a drying fatty acid, semi-drying fatty acid or mixture thereof; and
(iii) an C₁ to C₆ alkyl ester of a non aromatic polycarboxylic acid,
wherein said carbohydrate is composed of at least 2 carbohydrate units or more, and wherein said acyl is of formula R¹CO- wherein R¹ is C₁-C₆ alkyl.

13. Method according to claim 12, for the preparation of a polyester, comprising the step of transesterification of:
(i) a carbohydrate,
(ii) an C₁ to C₆ alkyl ester of a drying fatty acid, semi-drying fatty acid or mixture thereof; and
(iii) an C₁ to C₆ alkyl ester of a *non aromatic* polycarboxylic acid,
wherein said carbohydrate comprises at least 2 carbohydrate units or more.

14. Method according to claim 12, for the preparation of a polyester, comprising the step of interesterification of:
(i) an acyl ester of a carbohydrate,
(ii) an C₁ to C₆ alkyl ester of a drying fatty acid, semi-drying fatty acid or mixture thereof; and
(iii) an C₁ to C₆ alkyl ester of a non aromatic polycarboxylic acid,
wherein said carbohydrate comprises at least 2 carbohydrate units or more.

15. Method according to any of claims 12 to 14, wherein the free OH groups of the formed polyesters are partially acylated.

16. Method according to any of claims 12 to 13, carried out in the presence of a polar aprotic solvent

17. Use of a polyester according to any of claims 1 to 11 as a binder in paints.

18. Use of a polyester according to any of claims 1 to 11 as a binder in varnishes.

19. Alkyd paint comprising as a binder a polyester according to any of claims 1 to 11 and at least one drier.

## Patentansprüche

1. Polyester, erhältlich mittels Umesterung *(transesterification or interesterification)* von:
(i) einem Kohlenhydrat oder einem Acyl-Ester davon,
(ii) einem C₁- bis C₆-Alkyl-Ester einer trocknenden Fettsäure, halbtrocknenden Fettsäure oder einem Gemisch davon; und
(iii) einem C₁- bis C₆-Alkyl-Ester einer nicht-aromatischen Polycarbonsäure,
wobei das Kohlenhydrat wenigstens zwei Kohlenhydrateinheiten oder mehr umfasst, und wobei das Acyl die Formel R¹CO aufweist, wobei R¹ ein C₁ bis C₆-Alkyl ist.

2. Polyester gemäß Anspruch 1, erhältlich mittels Umesterung *(interesterification)* von:
(i) einem Acyl-Ester eines Kohlenhydrats,
(ii) einem C₁- bis C₆-Alkyl-Ester einer trocknenden Fettsäure, halbtrocknenden Fettsäure oder einem Gemisch davon; und
(iii) einem C₁- bis C₆-Alkyl-Ester einer nicht-aromatischen Polycarbonsäure,
wobei das Kohlenhydrat wenigstens zwei Kohlenhydrateinheiten oder mehr umfasst, und wobei das Acyl die Formel R¹CO aufweist, wobei R¹ ein C₁- bis C₆-Alkyl ist.

3. Polyester gemäß Anspruch 1, erhältlich mittels Umesterung *(transesterification)* von:
(i) einem Kohlenhydrat,
(ii) einem C₁- bis C₆-Alkyl-Ester einer trocknenden Fettsäure, halbtrocknenden Fettsäure oder einem Gemisch davon; und
(iii) einem C₁- bis C₆-Alkyl-Ester einer nicht-aromatischen Polycarbonsäure,
wobei das Kohlenhydrat wenigstens zwei Kohlenhydrateinheiten oder mehr umfasst.

4. Polyester gemäß einem der Ansprüche 1 bis 3, wobei das Kohlenhydrat oder der Acyl-Ester davon aus zwei bis sechs Kohlenhydrateinheiten besteht.

5. Polyester gemäß Anspruch 4, wobei das Kohlenhydrat oder der Acyl-Ester davon aus zwei bis vier Kohlenhydrateinheiten besteht.

6. Polyester gemäß einem der Ansprüche 1 bis 5, wobei das Kohlenhydrat oder der Acyl-Ester davon aus der Gruppe, die Saccharose, Trehalose, Raffinose, Gentianose, Kestose und Nystose umfasst, ausgewählt wird.

7. Polyester gemäß Anspruch 6, wobei das Kohlenhydrat oder der Acyl-Ester davon Saccharose ist.

8. Polyester gemäß einem der Ansprüche 1 bis 7, wobei die trocknende oder halbtrocknende Fettsäure oder ein Gemisch davon ausgewählt wird aus ethylenisch ungesättigten konjugierten oder unkonjugierten C₁₂- bis C₂₄-Carbonsäuren.

9. Polyester gemäß einem der Ansprüche 1 bis 8, wobei die trocknende Fettsäure oder halbtrocknende Fettsäure oder ein Gemisch davon eine Jodzahl von wenigstens 100 und vorzugsweise zwischen 100 und 140 aufweist.

10. Polyester gemäß einem der Ansprüche 1 bis 9, wobei die nicht-aromatische Polycarbonsäure aus Di-, Tri- oder Tetra-Carbonsäuren ausgewählt wird.

11. Polyester gemäß einem der Ansprüche 1 bis 10, wobei die nicht-aromatische Polycarbonsäure aus der Gruppe, die Glutarsäure, Adipinsäure, Pimelinsäure, Suberinsäure, Azelainsäure, Sebazinsäure, Undekandionsäure, 1,10-Dodekandicarbonsäure, dimere und trimere Fettsäuren umfasst, ausgewählt wird.

12. Verfahren für die Zubereitung eines Polyesters gemäß einem der Ansprüche 1 bis 11,
wobei das Verfahren den Schritt der Umesterung *(transesterification or interesterification)* des Folgenden umfasst:
(i) einem Kohlenhydrat oder einem Acyl-Ester davon,
(ii) einem C₁- bis C₆-Alkyl-Ester einer trocknenden Fettsäure, halbtrocknenden Fettsäure oder einem Gemisch davon; und
(iii) einem C₁- bis C₆-Alkyl-Ester einer nicht-aromatischen Polycarbonsäure,
wobei das Kohlenhydrat aus wenigstens zwei Kohlenhydrateinheiten oder mehr besteht, und wobei das Acyl die Formel R¹CO aufweist, wobei R¹ ein C₁- bis C₆-Alkyl ist.

13. Verfahren gemäß Anspruch 12, für die Zubereitung eines Polyesters, wobei das Verfahren den Schritt der Umesterung (*transesterification*) des Folgenden umfasst:
(i) einem Kohlenhydrat,
(ii) einem C₁- bis C₆-Alkyl-Esters einer trocknenden Fettsäure, halbtrocknenden Fettsäure oder einem Gemisch davon; und
(iii) einem C₁- bis C₆-Alkyl-Ester einer nicht-aromatischen Polycarbonsäure,
wobei das Kohlenhydrat wenigstens zwei Kohlenhydrateinheiten oder mehr umfasst.

14. Verfahren gemäß Anspruch 12, für die Zubereitung eines Polyesters, wobei das Verfahren den Schritt der Umesterung *(interesterification)* des Folgenden umfasst:
(i) einem Acyl-Ester eines Kohlenhydrats,
(ii) einem C₁- bis C₆-Alkyl-Ester einer trocknenden Fettsäure, halbtrocknenden Fettsäure oder einem Gemisch davon; und
(iii) einem C₁- bis C₆-Alkyl-Ester einer nicht-aromatischen Polycarbonsäure,
wobei das Kohlenhydrat wenigstens zwei Kohlenhydrateinheiten oder mehr umfasst.

15. Verfahren gemäß einem der Ansprüche 12 bis 14, wobei die freien OH-Gruppen der gebildeten Polyester partiell acyliert sind.

16. Verfahren gemäß einem der Ansprüche 12 bis 13, wobei das Verfahren in Anwesenheit eines polaren aprotischen Lösungsmittels ausgeführt wird.

17. Verwendung eines Polyesters gemäß einem der Ansprüche 1 bis 11 als ein Bindemittel in Farben.

18. Verwendung eines Polyesters gemäß einem der Ansprüche 1 bis 11 als ein Bindemittel in Lacken.

19. Alkyd-Farbe, umfassend als ein Bindemittel einen Polyester gemäß einem der Ansprüche 1 bis 11 und wenigstens ein Trocknungsmittel.

## Revendications

1. Polyester susceptible d'être obtenu par by transestérification or interestérification :
(i) d'un hydrate de carbone ou d'un ester d'acyle de celui-ci,
(ii) d'un ester alkylique en C₁-C₆ d'un acide gras siccatif, semi siccatif ou un mélange de ceux ci, et
(iii) d'un ester alkylique en C₁-C₆ d'un acide polycarboxylique non-aromatique,
dans lequel ledit hydrate de carbone comprend au moins 2 ou plusieurs unités d'hydrate de carbone, et dans lequel ledit acyle a la formule R¹CO- où R¹ est un alkyle en C₁ - C₆.

2. Polyester selon la revendication 1, susceptible d'être obtenu par interestérification :
(i) d'un ester d'acyle d'hydrate de carbone,
(ii) d'un ester alkylique en C₁-C₆ d'un acide gras siccatif, semi-siccatif ou un mélange de ceux ci, et
(iii) d'un ester alkylique en C₁-C₆ d'un acide polycarboxylique non-aromatique,
dans lequel ledit hydrate de carbone comprend au moins 2 ou plusieurs unités d'hydrate de carbone, et dans lequel ledit acyle a la formule R¹CO- où R¹ est un alkyle en C₁ - C₆.

3. Polyester selon la revendication 1, susceptible d'être obtenu par transestérification :
(i) d'un hydrate de carbone,
(ii) d'un ester alkylique en C₁-C₆ d'un acide gras siccatif, semi-siccatif ou un mélange de ceux ci, et
(iii) d'un ester alkylique en C₁-C₆ d'un acide polycarboxylique non-aromatique,
dans lequel ledit hydrate de carbone comprend au moins 2 ou plusieurs unités d'hydrate de carbone.

4. Polyester selon l'une quelconque des revendications 1 à 3, dans lequel ledit hydrate de carbone ou son ester d'acyle consiste de 2 à 6 unités d'hydrate de carbone.

5. Polyester selon la revendication 4, dans lequel ledit hydrate de carbone ou son ester d'acyle consiste de 2 à 4 unités d'hydrate de carbone.

6. Polyester selon l'une quelconque des revendications 1 à 5, dans lequel ledit hydrate de carbone ou son ester d'acyle est choisi dans le groupe comprenant le sucrose, le trehalose, le raffinose, le gentianose, le kestose et le nystose.

7. Polyester selon la revendication 6, dans lequel ledit hydrate de carbone ou son ester d'acyle est le sucrose.

8. Polyester selon l'une quelconque des revendications 1 à 7, dans lequel ledit acide gras siccatif, semi-siccatif ou le mélange de ceux-ci est choisi parmi les acides carboxyliques en C₁₂-C₂₄ éthyléniquement insaturés conjugués ou non-conjugués.

9. Polyester selon l'une quelconque des revendications 1 à 8, dans lequel ledit acide gras siccatif, semi-siccatif ou le mélange de ceux-ci a un indice d'iode d'au moins 100 et de préférence entre 100 et 140.

10. Polyester selon l'une quelconque des revendications 1 à 9, dans lequel ledit acide polycarboxylique non-aromatique est choisi parmi les acides di-, tri- ou tetra-carboxyliques.

11. Polyester selon l'une quelconque des revendications 1 à 10, dans lequel ledit acide polycarboxylique non-aromatique est choisi dans le groupe comprenant l'acide glutarique, l'acide adipique, l'acide pimélique, l'acide subérique, l'acide azélaïque, l'acide sébacique, l'acide undécanedoïque, l'acide 1,10 dodécanedicarboxylique, les acides gras dimères et trimères.

12. Procédé de préparation d'un polyester selon l'une quelconque des revendications 1 à 11, comprenant l'étape de transestérification ou d'interestérification :
(i) d'un hydrate de carbone ou d'un ester d'acyle de celui-ci,
(ii) d'un ester alkylique en C₁-C₆ d'un acide gras siccatif, semi-siccatif ou un mélange de ceux ci, et
(iii) d'un ester alkylique en C₁-C₆ d'un acide polycarboxylique non-aromatique,
dans lequel ledit hydrate de carbone comprend au moins 2 ou plusieurs unités d'hydrate de carbone, et dans lequel ledit acyle a la formule R¹CO- où R¹ est un alkyle en C₁-C₆.

13. Procédé selon la revendication 12, pour la préparation d'un polyester, comprenant l'étape de transestérification :
(i) d'un hydrate de carbone,
(ii) d'un ester alkylique en C₁-C₆ d'un acide gras siccatif, semi-siccatif ou un mélange de ceux ci, et
(iii) d'un ester alkylique en C₁-C₆ d'un acide polycarboxylique non-aromatique,
dans lequel ledit hydrate de carbone comprend au moins 2 ou plusieurs unités d'hydrate de carbone

14. Procédé selon la revendication 12, pour la préparation d'un polyester, comprenant l'étape d'interestérification :
(i) d'un ester d'acyle d'hydrate de carbone,
(ii) d'un ester alkylique en C₁-C₆ d'un acide gras siccatif, semi-siccatif ou un mélange de ceux ci, et
(iii) d'un ester alkylique en C₁-C₆ d'un acide polycarboxylique non-aromatique,
dans lequel ledit hydrate de carbone comprend au moins 2 ou plusieurs unités d'hydrate de carbone.

15. Procédé selon l'une quelconque des revendications 12 à 14, dans lequel les groupes OH libres du polyester formé sont partiellement acylés.

16. Procédé selon l'une quelconque des revendications 12 à 13, effectué en présence d'un solvant polaire aprotique.

17. Utilisation d'un polyester selon l'une quelconque des revendications 1 à 11 comme liant pour peintures.

18. Utilisation d'un polyester selon l'une quelconque des revendications 1 à 11 comme liant pour vernis.

19. Peinture alkyde comprenant un polyester selon l'une quelconque des revendications 1 à 11 comme liant et au moins un siccatif.
